Europäisches Patentamt

European Patent Office

Office européen des brevets

(11) Publication number: **0 042 932**
**A2**

# (12) EUROPEAN PATENT APPLICATION

(21) Application number: **81103176.4**

(22) Date of filing: **28.04.81**

(51) Int. Cl.³: **B 29 C 6/04**
**B 41 J 3/04**

(30) Priority: **30.06.80 US 164390**

(43) Date of publication of application:
**06.01.82 Bulletin 82/1**

(84) Designated Contracting States:
**DE FR GB IT**

(71) Applicant: **International Business Machines Corporation**

**Armonk, N.Y. 10504(US)**

(72) Inventor: **Kendall, Arthur Harry**
**569 Blueberry Lane**
**Franklin Lakes New Jersey 07417(US)**

(72) Inventor: **Rohr, Robert Lewis**
**117 Brown Road**
**Scarsdale New York 10583(US)**

(72) Inventor: **Thomson, John**
**Ticonderoga Road**
**Carmel New York 10512(US)**

(74) Representative: **Petersen, Richard Courtenay**
**IBM United Kingdom Patent Operations Hursley Park**
**Winchester Hants. SO21 2JN(GB)**

(54) **A process for the manufacture of hollow tube-like members.**

(57) A process for the manufacture of a plurality of tube-like members includes encapsulating a plurality of tube-like members (11) in a body (10) of a composition containing a polymeric material and solid filler particles, so that the elongated passages of the tube-like members are parallel to each other. The body is sliced normal to the passages to form slices with two parallel end surfaces, which are lapped. The passages are filled with a bonding agent and the surfaces rough-polished. Some bonding agent is removed from the passages by use of a solvent and the surface fine-polished. The remainder of the bonding agent is subsequently removed from the passages.

FIG. 2

# A PROCESS FOR THE MANUFACTURE OF HOLLOW TUBE-LIKE MEMBERS

The present invention is concerned with a process for the manufacture of a plurality of tube-like members and is applicable particularly, but not exclusively, to very small tube-like members which are difficult to handle individually. Tube-like members which can be prepared by the process of the present invention include those suitable as ink-jet nozzles and adapters for ink-jet nozzles.

Various methods have been suggested for fabricating tube-like members with minute openings or orifices therein, including methods for making nozzles to be used in ink-jet printing and recording. In ink-jet recorders, liquid ink is supplied under pressure to a nozzle having a very small opening through which an extremely fine continuous jet of ink is projected. It has become recognized that the proper operation of such recorders depends greatly upon the manner in which the nozzle is sealed to its surrounding surface. The area of the vicinity of the nozzle must be void-free and bubble-free to prevent leaking or breaking when the nozzle in thin form is subjected to fluid pressure. Furthermore, the sealing operation must be performed in such a way as not to change the size and/or shape of the nozzle.

One way to bond ink-jet nozzles is referred to as field-assist bonding or anodic bonding of the nozzles to a substrate. The finish of the surfaces to be bonded is extremely critical in such process and requires substantially flat surfaces in order to achieve uniform bonding. However, for ink-jet nozzles, it is also desirable that the nozzle
passage ends have a slightly rounded edge to provide smooth,
uniform, flow-free entrances and exits to ensure good
directionality and directional stability, particularly during
start-up and shut-down.  The techniques used to obtain flat
smooth finishes tend to form sharp corners rather than
rounded smooth entrances at the orifice openings.

Furthermore, in view of the large numbers of nozzles
employed in ink-jet printers, it would be desirable to be
able to produce large quantities of nozzles while maintaining
close controls of the nozzle sizes and uniformity of the
nozzles.

Accordingly, the invention provides a process which
comprises encapsulating a plurality of elongated hollow
tube-like members in a body of a composition containing
polymeric material and solid filler particles having hardness
and lapping and polishing characteristics similar to those of
the tube-like members, the elongated passages of the
tube-like members being parallel to each other and the
tube-like members being surrounded by the composition,
slicing the body normal to the passages to form slices with
the two parallel end surfaces, lapping each of the two
parallel end surfaces, filling the passages of each of the
two parallel end surfaces of the slices with a bonding agent
which is different from the polymeric material and is soluble
in a solvent which does not affect the slices,
rough-polishing each of the two parallel end surfaces when
filled with bonding agent, fine-polishing each of the two
parallel end surfaces, and removing the bonding agent from
the passages by use of a solvent which does not affect the
slices.

The process of the present invention provides a
technique for producing large quantities of very closely
controlled tube-like members, and especially nozzles and
adapters for ink-jet printers. In addition, the process of
the present invention eliminates the individual handling of
small, thin, fragile wafers of, for instance, glass which has
been required by many of the prior art techniques. In
addition, the process of the present invention permits
processing with mass production equipment, thereby resulting
in reduced cost.

The process of the present invention includes
encapsulating a plurality of elongated, hollow, tube-like
members in a body of a composition which contains a polymeric
material and a solid filler. The solid filler particles have
a hardness, and lapping and polishing characteristics which
are similar to those of the hollow tube-like members. The
plurality of elongated hollow tube-like members are
positioned so that the elongated passages of the members are
parallel to each other. The tube-like members are
surrounded by the composition. The composition containing
the polymeric material and solid filler has hardness, and
lapping and polishing characteristics similar to those of the
tube-like members.

The body containing the encapsulated, elongated, hollow
tube-like members is sliced in a direction normal to the
passages in the members in order to form slices with two
parallel end surfaces.

The parallel surfaces of the slices are lapped. The
passages of the tube-like members of the slices are filled
with a bonding agent. The bonding agent differs from the polymeric material used to encapsulate the elongated hollow
tube-like members and is soluble in a solvent which does not
dissolve the slices.

The parallel surfaces of the slices are rough-polished.
During the rough-polishing the passages are filled with the
bonding agent.  In addition, the bonding agent is removed
from the passages by use of a solvent which does not dissolve
the slices.

When it is desired to form hollow tube-like members
which have flat planar smooth surfaces with passage openings
having a slightly rounded edge, the parallel surfaces of the
slices are also fine-polished after removal of a portion of
the bonding agent from the passages.

The present invention is also concerned with hollow
tube-like members obtained by the above-defined process and
the hollow tube-like members which have planar smooth
surfaces where slices which are free from evidence of
scratching at 1000x magnification and have at least a 0.5μm
radius at the orifice edge.

The scope of the invention is defined by the appended
claims; and how it can be carried into effect is hereinafter
particularly described with reference to the accompanying
drawings, in which :-

Figure 1 is an isometric view of a mould used to prepare the
encapsulated body employed in the process of the present
invention;

Figure 2 is an illustration of a device suitable for holding the moulded body during slicing;

Figure 3 is a front view of a slice containing a plurality of tube-like members; and

Figure 4 shows, to an enlarged scale, a portion of the slice shown in Figure 3.

The process of the present invention is concerned with the manufacture of a plurality of hollow tube-like members of uniform size and surface finish. The hollow tube-like members are preferably cylindrical, but other shapes can be employed if desired. The tube-like members are of a material which can be sliced or cut and then polished to provide a smooth surface and include such materials as glass and ceramics, such as alumina and titania. The preferred material employed is glass. Examples of suitable glasses include the borosilicate glasses, such as Pyrex 7740.

A plurality of the elongated hollow tube-like members is encapsulated in a body of a composition which contains a polymeric material and solid filler particles. The elongated hollow tube-like members are encapsulated so that the elongated passages of the tube-like members are parallel with respect to each other. The tube-like members are surrounded by the composition employed.

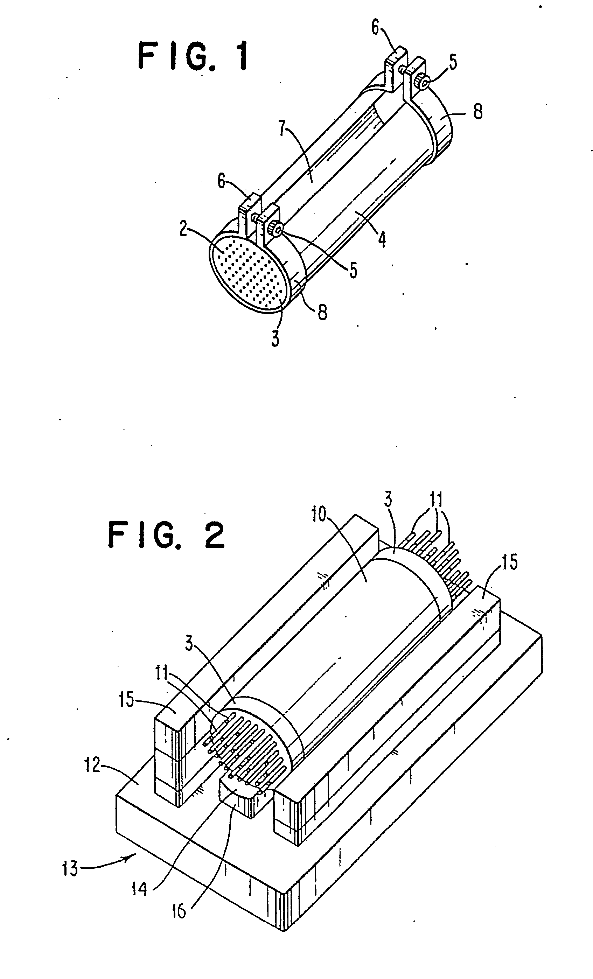

A mould (Fig.1), suitable for encapsulating the elongated hollow tube-like members, comprises a cylindrical shell 4 and two end caps 3, one only of which is shown and which are circular and positioned within the shell 4. The end caps 3 have holes 2, through which the hollow tube-like members can be inserted. The holes 2 in the end caps 3 correspond to the shape and size of the hollow tube-like members to be inserted therein and are aligned so that the elongated passages of the inserted tube-like members are parallel to each other. The end caps 3 are made of a nonstick material which permits the hollow tube-like members to be positioned in and moved through the holes. In addition, it is preferred that the end caps be of a material which does not bond to the encapsulating composition subsequently employed in the process. Suitable nonstick materials include polymers of fluorinated hydrocarbons, such as polytetrafluoro-ethylene, available under the trade designation Teflon. The end caps can be so prepared that only the insides of the holes 2 are coated with a nonstick-like material. One easy way in which to insert the hollow tube-like members is to place both end caps 3 adjacent and aligned with each other, to push the tube-like members through the aligned holes and then to separate the end caps from each other.

The assembly of inserted elongated tube-like members and end caps is placed in the cylindrical shell 4. The tube-like members and end caps can be held in place by the use of two straps 8, one at each end. The straps 8 have end flanges 6 which can be drawn together by tightening screws 5 to hold the end caps in position within the shell 4 by friction. A convenient length of tube-like member is about 127 to 152.4mm (5 to 6 inches).

The mould is then filled with the encapsulating composition. Preferably, this is done by disposing a gap 7 between the adjacent longitudinal edges of the shell 4 at the top centre and pouring the composition through the gap 7.

The encapsulating composition can then fill the mould from
the bottom to the top, permitting as much entrapped air as
possible to rise up and out of the mould.  It is preferred
that the mould shell and end caps be coated internally with a
release agent, such as a silicone composition, in order to
facilitate removal of the moulded shape.  The encapsulating
composition is then permitted to cure, which usually takes
from about 1 to about 5 hours at temperatures from about 70
to about 150°C.

In a typical arrangement for preparing nozzles or
adapters, the spacing between tube is about 635 to about
2540µm (about 25 to about 100 mils), and preferably between
about 1016 and about 1524µm (about 40 to about 60 mils).

The hardness, lapping and polishing characteristics
(i.e. - lapability and polishability) of the encapsulating
composition employed should be similar to those of the
tube-like members.  It is preferred that the similarity be
such that the difference between the thickness of the
composition and the thickness of the tube-like members after
the final polishing is only about 5µm (0.2 mil) or less, and
preferably about 2.5µm (0.1 mil) or less.

Compositions which possess these required
characteristics contain a polymeric material, which is
preferably a thermosetting epoxy polymer, and solid filler
particles, the hardness, lapping and polishing
characteristics of the solid filler particles being similar
to those of the tube-like members.  Preferably, the filler
particles are made from the same material as the hollow
tube-like members.  For instance, in employing glass
tube-like members, it would be preferred to employ, as the filler material, glass filler particles. The size of the
filler particles should be no greater than about 325 mesh.
The smaller the particles, the better the composition is for
the subsequent lapping and polishing operations.

The use of encapsulating compositions which contain an
epoxy polymer without the solid filler would result in a
product which does not have the flatness desired from the
products prepared according to the present invention, because
the polishing and lapping characteristics of the epoxy
polymers differ significantly from those of the elongated
tube-like members contemplated in the process of the present
invention.

Although thermosetting epoxy polymers are preferred,
other polymers can be employed provided such do not become
tacky or sticky at the normal temperatures generated during
the lapping and polishing operations. The lapping and
polishing cause localized heating at the surfaces. Moreover,
the polymeric material should not soften or become sticky or
tacky at the temperatures employed subsequently to bond the
moulded shape to a slicing plate which is usually at about
150°C. Softening of the polymeric material could result in
the lapping or polishing material becoming embedded therein
and/or a significant difference in the rate of lapping and
polishing as compared to that of the tube-like members. In
addition, it is necessary that the polymeric material
employed be insoluble in solvents employed to remove any
bonding agent as will be discussed hereinbelow. The epoxy
polymers can be of the epichloro-hydrin-bisphenol-A type. An
example of an epoxy composition employed according to the
process of the present invention is commercially available
under the trade designation Stycast 2651-40 available from Emerson and Cuming, Inc. This composition, in addition to
the epoxy, contains some mica-like mineral filler. The
composition according to the manufacturer has the following
properties :

YO9-79-062                          10

### Stycast 2651-40

#### Low Viscosity

#### QPL 16923

| | |
|---|---|
| Basic Composition | Filled Epoxies |
| Mix Preparation | Add Cat. 9 or 11 |

#### Typical Properties

| | |
|---|---|
| Mixed Viscosity (centipoises) | 4000 |
| CURE TEMPERATURE | R.T, or Elev. |
| Curing Shrinkage (average) | 0.2% |

CURED PROPERTIES

| | |
|---|---|
| Standard Colour | Black |
| Flexibility | Rigid |
| Hardness Shore Durometer | D-88 |
| SPECIFIC GRAVITY | 1.45 |
| YIELD STRENGTH kg/cm² Compressive, 0.2% offset | 1090 |

YO9-79-062                              11

Elastic Modulus kg/cm²              $0.6 \times 10^{-7}$
Compressive

Impact Strength Ergs/cm²            $1.6 \times 10^{-6}$
(relative/Izod)

SERVICE TEMPERATURE °C              177

Thermal Conductivity
CAL/cm/sec cm² - °C                 .0013
Watts per metre Kelvin .00544

Thermal Expansion                   $45 \times 10^{-6}$
cm/cm per °C

Water absorption                    0.1
% gain 24 hrs

Also of interest concerning the epoxy polymers is a reprint of a paper presented at the 16th annual technology conference of the Society for Plastic Engineers, January 1960, by Emerson and Cuming entitled "Low Loss Casting Resins".

The relative proportions of solid filler particles and polymeric material are such that the hardness, lapping and polishing characteristics of the cured encapsulating composition are as close to those of the tube-like members as possible and the uncured composition has a viscosity which renders it readily pourable into the mould. Also, the composition must contain sufficient polymer to provide an adequate bond with the tube-like members to withstand the processing. Compositions containing up to equal parts of solid filler and epoxy by volume can be employed. In addition, the composition should contain a curing or hardening agent, such as an aliphatic amine or an anhydride normally used in curing epoxy polymers.

A particular composition employed according to the present invention contains about 2 parts by weight Stycast 2651-40 and about 1 part by weight of a catalyst #9 available from Emerson and Cuming, In. The composition is heated to about 37.7°C (100°F) in order to facilitate mixing with the glass powder which is mixed at a ratio of about 5 parts by volume of glass powder per 10 parts of epoxy composition. The glass powder, such as Pyrex 7740, has a particle size of about 325 mesh. The composition is cured at a temperature of 125°C in about 1 hour.

In a preferred embodiment of the present invention, the tube-like members are coated prior to encapsulation with a thermoplastic polymeric composition, such as a lacquer which is not soluble in the solvents to be employed for removing the bonding agent as will be discussed hereinbelow, but is soluble in another type of solvent. The lacquers employed must adhere to tube-like members and also to the encapsulating composition. The lacquer coating when dried should not be soluble in the epoxy.

A lacquer is used to make it possible readily to separate the tube-like members after processing from the cured encapsulating composition merely by using a suitable solvent. However, it is not necessary to use a lacquer coating, because the encapsulating composition can be subjected to decomposition temperatures, as will be discussed hereinbelow, which will not affect the tube-like members, but will destroy the polymeric material in the encapsulating composition. The filler material such as the glass filler in the encapsulating composition would not be destroyed by the heat, but would remain in the form of a dry powdery residue which is easily separated from the desired product. When a lacquer composition is employed, such is usually coated on the tube-like members to provide a thickness of about 38.1 to about 50.8μm (about 1.5 to about 2 mils), when preparing ink-jet nozzles.

Examples of some lacquer compositions are cellulose base materials, such as nitrocellulose, vinyl polymers, acrylic polymers, and methacrylic polymers, such as polymethylacrylate, polyethylacrylate, and polymethylmethacrylate. Such lacquer compositions are readily commercially available, such as under the trade designation Krylon. The preferred lacquer compositions employed according to the present invention are soluble in such solvents as ketones, such as acetone and
methylethylketone.

The hardness and lapping and polishing characteristics
of the encapsulating composition must be similar to those of
the tube-like members.  This makes it possible to provide a
finished product which possesses flat surfaces.  This also
makes it possible to remove, during the lapping and
polishing, a thickness of the encapsulating composition which
is as close to the thickness removed from the tube-like
members as possible.  This, in turn, provides for as uniform
a surface over the entire slice as is possible.

Because the encapsulating composition surrounds each
individual tube-like member, a symmetrical polishing pattern,
both over the surface and around the orifices of the
tube-like members, is ensured.  If, for example, glass tubes
were to be packed in parallel fashion in a container, so that
each tube touched adjacent tubes with the space between the
tubes being filled with a polymer composition, treatment of
such a structure would not result in the same symmetrical
polishing as the present invention, because portions of the
material would be removed at different rates, due to the
tubes not being surrounded by polymer composition.

Compositions having viscosities up to about 5,000
centipoise at the temperature of pouring are quite suitable
for carrying out the present invention.  The temperatures
employed for pouring are usually from about 45 to about
75°C.  The encapsulated, elongated tube-like members are
removed from the mould after curing and the moulded shape is
secured onto a holding device 13 (Fig.2) for subsequent
slicing or sawing.

The holding device 13 has a base 12 to which are secured
a shaped ceramic stand 16 and two ceramic side walls 15.

The moulded article 10 (Fig.2) with hollow tube-like
members 11 extending through and past the end plugs 3 is
positioned on the ceramic stand 16 between the ceramic walls
15 and secured by the use of temporary bonding agent 14, such
as a low temperature wax (e.g. softening at about 150°C or
below). The bonding agent employed can be, for instance, any
thermoplastic wax; polyesters such as glycolphthalate esters;
and adhesive silicones. The two ceramic walls 15 help to
maintain the moulded article in proper position. The ceramic
walls 15 are of a much softer material than the moulded
article and, accordingly, are readily cut. Such walls act to
clean the cutting wheel and help to locate the moulded
article. As will be apparent to those skilled in the art,
other mounting and machining techniques, such as inside
diameter saws, can be used if desired.

By having the tube-like members extend outwardly from
the end caps, alignment of the moulded article is
facilitated. Once secured, the moulded article is sliced or
sawn normal to the elongated passages of the tube-like
members to form slices with two parallel end surfaces. The
cutting or slicing can be carried out by use of a gang of
parallel saws separated by the distance desired for the
thickness of the elongated tube-like members. In a typical
exemplary process, the cutting wheel is a diamond wheel of
about 180 to about 220 mesh size operating at about 1,524
surface metres per minute (5,000 surface feet per minute).
The wheels have a thickness of about 635µm (25 mils). The
feed rate for the glass is about 0.508 to about 1.27mm (0.02
to about 0.05 inches) per minute.

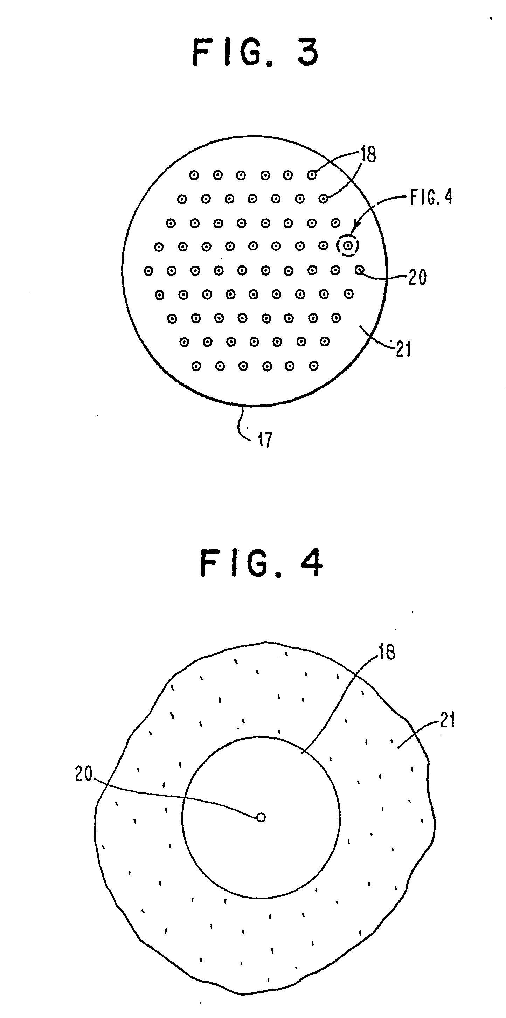

The slices are removed from the die. A slice 17 (Figs. 3 & 4) of the moulded article 10 contains a plurality of tube-like members 18 from the tube-like members 11, each member 18 having a hollow passage 20. The hollow tube-like members 18 are surrounded on all sides except their end faces by encapsulating composition 21.

The parallel surfaces of the slice are subjected to a lapping operation. In a preferred method, the slice is mounted on a lapping fixture by a bonding agent which is different from the polymeric material employed in the encapsulation and different from the lacquer coating, if any, on the tube-like members. In addition, the bonding agent should be readily soluble in a solvent which does not affect the slices or dissolve any coating on the tube-like membes. The slice is mounted by coating with the bonding agent that parallel surface of the slice which is to contact the base of the lapping device. Other means of securing the slice to the lapping device, such as two-sided tape, can be used if desired. The bonding of the surface to the lapping fixture with a bonding agent results in filling the passages 20 of the tube-like members by capillary action. The surface to which the bonding agent attaches the slice is normally a metal surface, such as brass. Accordingly, the bonding agent must be capable of adhering the slice to a metallic surface.

The bonding agent is usually present in amounts to provide a film thickness of about 5.08 to about 7.62μm (about 0.2 to about 0.3 mils) in the preparation of ink-jet nozzles. The filling of the passages of the tube-like members with a bonding agent, although not essential, is preferred for the lapping operation. However, as will be discussed hereinbelow, the passages during the subsequent rough-polishing should be filled with the bonding agent.

Suitable bonding agents include waxes, a particular one employed being available under the trade designation Apiezon wax. The wax employed is readily soluble in halogenated hydrocarbon solvents, such as 1,1,1-trichloroethane and trichloro-ethylene, the most preferred solvent being trichloro-ethylene. The preferred solvents are saturated, aliphatic, chlorinated hydrocarbons. It is important that the bonding agent be readily soluble in the solvent, because otherwise it is quite difficult to remove the wax completely from the very small size orifices for ink-jet nozzles, and it is essential that the inside passages of the nozzles be completely free from wax, when the nozzles are finished.

Examples of natural waxes include paraffin wax, microcrystalline wax, petrolatum, beeswax, spermaceti, carnauba, candelilla, ceresin and montan. Examples of some synthetic waxes include ethylenic polymers such as polyethylene and polypropylene, polyol ether esters such as the carbowaxes, chlorinated naphthalenes such as available under the trade designation Halowax, and Fischer-Tropsch hydrocarbon waxes.

The surface of the slice facing upward is subjected to a lapping operation to eliminate the damage due to the slicing or sawing operation and to remove big chips on the surface. A typical lapping machine is available under the trade designation Lapmaster by Crane Packing Company. In a typical lapping operation, the thickness of the wafer or slice prior to lapping is about 0.2 to about 5 mm, and preferably about 0.5 to about 1.5 mm thick, and the initial lapping on the first side removes about 0.1 mm.

In addition, although not preferred, it is possible to employ a technique for lapping both sides of the slice at the same time by use of planetary lapping/polishing equipment. Such a technique should be employed, however, only when the slice is relatively thick such as to provide a final product of about 50.8 to about 152.4μm (about 2 to about 6 mils) thickness.

According to the preferred sequence, the lapped surface is then subjected to a rough-polishing step to remove the roughness from the lapping operation. In a typical rough-polishing step which follows the lapping operation, a Buehler polishing cloth 40-7616 can be employed along with a slurry of an abrasive material, such as aluminium oxide, cerium oxide, diamond, barnesite, or a rare earth material in a suspension. If the passages of the tube-like members have not already been filled with a bonding agent, as discussed hereinabove, the passages are filled with a bonding agent prior to the polishing operation. The presence of the bonding agent in the passages during this polishing operation protects the edges of the passages from chipping.

In addition, this rough-polishing operation can be carried out so as to polish both sides of the slice at the same time in the manner discussed above for the lapping operation.

The preferred sequence of the present invention is then to remove some of the wax, such as about 0.002mm to about 0.05mm, from the surface facing upward by dissolving the wax in a suitable solvent. This can be accomplished by swabbing onto the wafer a solvent suitable for dissolving the bonding agent, such as trichlorethylene in the case of Apiezon wax.

After the wax, or some of it, is removed from the holes, in the preferred method of the present invention, the polished side is then subjected to a fine-polishing operation in which to remove the roughness from the prior polishing step. The fine-polishing step should be such that no evidence of scratching or chipping can be seen at 1000x magnification. In addition, removal of some of the wax prior to the fine-polishing step makes it possible to provide rounded orifice corners which, according to the present invention, when employing ink-jet nozzles, have at least 0.5μm radius at the hole or orifice. In addition, the removal of wax helps to encapsulate loose polishing abrasive or loose glass particles, thus entrapping them to prevent them from damaging or scratching the highly polished surface.

In the preferred sequence of the present invention, the wafer is then removed from the lapping fixture by heating to about 145°C, when the bonding agent melts and the wafer can be slid off, and the wafer can be remounted on the lapping device. On the remounting, the side which was previously facing downward now faces upward, of course, for lapping, rough-polishing and fine-polishing in the same manner as the first side was treated. However, it is recognized that although this is the preferred sequence of steps, it is possible to turn the wafer over after the lapping step so that both sides are lapped and/or turn the wafer over after the first polishing step so that both sides are at least rough-polished prior to the fine-polishing step. However, the above preferred sequence involves the least handling of the slices and is the quickest way to achieve the desired result. Also, as previously mentioned, both sides of the slice can be lapped and/or polished at the same time using, for instance, planetary lapping/polishing equipment.

YO9-79-062                        20

In a typical arrangement for ink-jet nozzles, the final polishing results in a nozzle length of about 25 to about 75 μm. Typical nozzles also include an outside diameter of about 1 to about 2 mm with an inside diameter of about 15 to about 65 microns. Typical adapters have outside diameters of about 1 to about 3 mm and inside diameters of about 0.25 to about 1.5 mm. Moreover, instead of using cloth pads in the lapping and polishing operations, it is possible to use pitch-polishing techniques which are used in preparing optical devices. The pitch flows uniform to the shape of the surface being polished. However, use of pitch-polishing would not result in the rounded corners, but instead would result in sharp corners, because pitch-polishing conforms to the general shape of the surface. Such a technique, however, is quite suitable for making adapters which are thicker with bigger holes as compared to the nozzles. Also, sharp corners are important for bonding techniques for adapters.

Moreover, in order to achieve both orifice edge rounding and flatness of the wafer surface, a combination of soft pad and pitch-polishing could be used in the fine-polishing operation.

The nozzles can then be removed from the slice by dissolving the lacquer coating in a suitable solvent in the event a lacquer has been previously used. A preferred solvent for the type of lacquers discussed hereinabove is a ketone. Also, it is not necessary to employ a lacquer coating, because the individual nozzles can be separated from the slice by thermal decomposition of the encapsulating matrix by placing it in an oven and heating it to a temperature below the anneal point of the tube-like members, such as below about 600°C. In addition, the tube-like members need not be removed from the matrix, but can be
shaped within the matrix and removed by the user of the
nozzles or adapters.

The wax from the final fine-polishing step, which is on
the reverse side (that side not being fine-polished), can be
removed from the nozzles, if employed. The wax is readily
removed by suitable solvent, such as trichloroethylene.

In the event that the polymer component of the
encapsulation composition is to be subjected to thermal
decomposition, it is preferred that the bonding agent (e.g.
wax) be removed prior to the decomposition. The lacquer, if
employed, need not be removed prior to such thermal
decomposition but could be thermally decomposed along with
the polymer component of the encapsulation composition.

Although, as shown in Fig.3, there is an array of 70
nozzles per slice, the process of the present invention can
be employed for arrays of as few or as many tube-like members
as desired and of any desired size.

By being able to employ a large surface area, it is
easier to render the two faces or surfaces of the slices as
parallel to each other as possible, because any error in
alignment will be distributed over the large wafer diameter
as compared to being entirely distributed to a single small
nozzle diameter. Moreover, the present invention makes it
possible to measure the tube-like members prior to the
encapsulation process, because no size changes occur in the
orifice during the processing. The process makes it easy to
trace individual members from the beginning of the glass
billet melt to the formation of the elongated member to the final wafers.  Furthermore, only one thin wafer need be
inspected for an entire batch, because it is a true random
sample.  Inspection of the one wafer will indicate the
orifice size distribution of all the other wafers to
determine whether they satisfy the necessary tolerances,
because the wafer represents a true random sample of all the
encapsulated tube-like members.  Furthermore, it is possible
to use the thickness of the wafer to check the thickness of
the nozzles, because the nozzle thickness and wafer thickness
differ by a certain defined constant amount for any
particular composition employed.

0042932

CLAIMS

1   A process for the manufacture of a plurality of hollow
tube-like members, which comprises encapsulating a plurality
of elongated hollow tube-like members (11) in a body (10) of
a composition containing polymeric material and solid filler
particles having hardness and lapping and polishing
characteristics similar to those of the tube-like members,
the elongated passages of the tube-like members being
parallel to each other and the tube-like members being
surrounded by the composition, slicing the body (10) normal
to the passages to form slices (17) with two parallel end
surfaces, lapping each of the two parallel end surfaces,
filling the passages (20) of each of the two parallel end
surfaces of the slices with a bonding agent which is
different from the polymeric material and is soluble in a
solvent which does not affect the slices, rough-polishing
each of the two parallel end surfaces when filled with
bonding agent, fine-polishing each of the two parallel end
surfaces, and removing the bonding agent from the passages by
use of a solvent which does not affect the slices.

2   A process according to claim 1, in which the surfaces
are fine-polished after removal of a portion of the bonding
agent from the passages.

3   A process according to claim 2, in which the bonding
agent is removed from the top surface to a depth of about
0.002 mm to about 0.05 mm from the passages prior to
fine-polishing.

4    A process according to any preceding claim, in which the
hollow tube-like members are glass tubes.

5    A process according to any preceding claim, in which the
hollow tube-like members are cylindrical.

6    A process according to any preceding claim, in which the
polymeric material material is an epoxy polymer.

7    A process according to any preceding claim, in which the
solid filler particles are of the same material as the hollow
tube-like members.

8    A process according to any preceding claim, in which the
particle size of the filler particles is about 325 mesh or
smaller.

9    A process according to any preceding claim, in which the
hardness and lapping and polishing characteristics of the
composition are such that the difference between the
thickness of the composition and the thickness of the
tube-like members after the final polishing is about 5 to
about 10µm.

10   A process according to claim 9, in which said difference
is about 2.54µm (0.1 mil) or less.

11   A process according to any preceding claim, in which the
tube-like members are coated prior to encapsulation with a
thermoplastic polymeric composition which is not soluble in
the solvent employed for removing the bonding agent.

0042932

12 A process according to claim 11, in which the thickness of the coating is about 38.1 to about 50.8μm (about 1.5 to about 2 mils).

13 A process according to any preceding claim, in which the bonding agent includes a wax.

14 A process according to claim 13, in which the wax is soluble in halogenated hydrocarbon solvent.

15 A process according to claim 14, in which the halogenated hydrocarbon solvent is a saturated, aliphatic, chlorinated hydrocarbon solvent.

16 A process according to claim 14, in which the solvent is selected from the group of 1,1,1-trichlorethane, or trichlorethylene, or mixtures thereof.

17 A process according to claim 13, in which the solvent employed to remove the wax is trichlorethylene.

18 A process according to any preceding claim, in which the tube-like members have at the hole or orifice thereof a radius of at least 0.5μm.

19 A process according to any preceding claim, in which one surface of a slice is lapped, rough-polished and fine-polished, the slice is turned over, and the other surface is lapped, rough-polished and fine-polished.

20 A process according to any of claims 1 to 18, in which both surface of a slice are lapped at the same time.

21   A slice including a plurality of hollow tube-like members, prepared by a process according to any preceding claim.

22   A hollow tube-like member obtained from a slice according to claim 21.

FIG. 1

FIG. 2

# FIG. 3

# FIG. 4